# FASCICULE DE BREVET EUROPEEN

(11) **EP 2 417 523 B1**
(45) Date de publication et mention de la délivrance du brevet: **20.05.2020**
(21) Numéro de dépôt: 10717705.7
(22) Date de dépôt: 31.03.2010
(51) Int. Cl.: G06F 9/46

(54) **PROCEDE ET DISPOSITIF PERMETTANT L'EXECUTION DE COMPOSANTS TRANSACTIONNELS HETEROGENES**
VERFAHREN UND EINRICHTUNG ZUR ERMÖGLICHUNG DER AUSFÜHRUNG VON HETEROGENEN TRANSAKTIONSORIENTIERTEN KOMPONENTEN
METHOD AND DEVICE ENABLING THE EXECUTION OF HETEROGENEOUS TRANSACTION-ORIENTED COMPONENTS

(30) Priorité: 09.04.2009 FR 0901764
(43) Date de publication de la demande: 15.02.2012
(73) Titulaire: Bull SAS, 78340 Les Clayes-sous-Bois (FR)
(72) Inventeur: AYDIN, Alev, F-78990 Elancourt (FR); JAOUEN, François, F-78340 Les Clayes Sous Bois (FR)
(74) Mandataire: Santarelli
(86) Numéro de dépôt international: PCT/FR2010/050615
(87) Numéro de publication internationale: WO 2010/116072

(56) Documents cités:
- GB-A- 2 313 456
- GB-A- 2 339 622
- US-A- 6 151 637
- US-A1- 2006 282 400
- R. BARGA AND C. PU: "Reflection on a Legacy Transaction Processing Monitor" PROCEEDINGS REFLECTION '96, 1996, pages 1-16, XP002561100

## Description

La présente invention concerne les systèmes transactionnels et plus particulièrement un procédé et un dispositif pour l'exécution de processus transactionnels, dans un environnement informatique ouvert, faisant appel à des composants transactionnels développés pour un environnement d'exécution de type propriétaire non compatibles avec cet environnement ouvert. La présente invention vise ainsi un procédé et un dispositif permettant l'exécution de composants transactionnels hétérogènes.

La notion de transaction a été développée pour les systèmes de gestion de bases de données dans les années 1970. Les applications informatiques mettant en œuvre des processus transactionnels sont couramment utilisées dans de nombreuses applications telles que la gestion financière, la gestion de personnes et la gestion de services. Ces applications sont basées sur des systèmes d'information complexes selon lesquels plusieurs applications partagent des données stockées sur des machines différentes connectées à un réseau de communication. La gestion des transactions a notamment pour objet de maintenir la cohérence des données accédées et les mises à jour de ces données par des applications distinctes.

De façon générale, une transaction est une séquence d'opérations exécutées sur des données du système d'information. Pour garantir la cohérence des données traitées, les transactions doivent répondre à des propriétés d'atomicité, de cohérence, d'isolation et de durabilité, appelées ACID. L'atomicité est la caractéristique selon laquelle si une transaction se termine correctement elle a les effets désirés sur les données tandis que si elle connaît un problème en cours d'exécution, elle n'a aucun effet sur les données. En d'autres termes, chaque transaction doit conduire à un succès ou à un échec mais elle ne doit pas rester dans un état intermédiaire. La cohérence vise à préserver la cohérence des données. L'isolation a pour effet qu'une transaction n'est pas visible par les autres transactions. La durabilité vise la validité permanente des effets des transactions qui se sont déroulées normalement sur les données.

A l'origine, les systèmes transactionnels étaient généralement développés sur des systèmes de type *mainframe,* c'est-à-dire des ordinateurs centralisés ayant de fortes capacités de calcul et de mémoire. Les systèmes d'exploitation et l'environnement de développement de ces systèmes étaient généralement de type propriétaire, c'est-à-dire spécifiques aux machines sur lesquels ils s'exécutent. En effet, chaque constructeur informatique développant une machine de type *mainframe* développait également un environnement d'exécution propre à cette machine. Ainsi, une application transactionnelle développée pour un système de type *mainframe* n'est pas facilement portable sur un autre système.

Aussi, si les constructeurs de tels systèmes assurent généralement une compatibilité ascendante des applications sur leurs nouveaux systèmes, un utilisateur ne peut pas transporter un ensemble d'applications développées pour un environnement particulier d'exécution de type particulier vers un autre environnement.

Par ailleurs, une grande partie des applications mettant en œuvre des transactions est développée dans un langage appelé COBOL (acronyme de *COmmon Business Oriented Langage* en terminologie anglo-saxonne), particulièrement adapté au développement de ces applications. Cependant, alors que de nombreuses applications sont encore basées sur ce langage, celui-ci tend à disparaître au profit d'autres langages tels que le langage C ou le langage Java (Java est une marque). Par conséquent, il y a de moins en moins de programmeurs compétents dans ce langage pour maintenir ces applications et en développer de nouvelles.

En raison de ces contraintes générées par l'aspect propriétaire de certains systèmes de type *mainframe* et par le langage COBOL mis en œuvre dans de nombreuses applications transactionnelles, il existe un besoin de faire évoluer ces applications vers des systèmes de type ouvert, c'est-à-dire des systèmes dont les spécifications techniques sont publiques, permettant à des tiers de développer, de porter, voir de moderniser ces applications.

Il a ainsi été envisagé de ré-écrire ou recompiler le code des applications existantes pour permettre leur portage dans un environnement d'exécution de type ouvert. Cependant, en raison de la complexité de ces applications et des difficultés pour les tester, le prix d'un tel portage s'avère généralement prohibitif.

Il est connu du document GB 2 313 456 un gestionnaire de ressources ayant un rôle d'interface entre des gestionnaires de transactions, permettant notamment d'initier correctement des transactions dans deux environnements distincts. Il est par ailleurs connu du document GB 2 339 622 des systèmes transactionnels de type client-serveur mettant en œuvre plusieurs serveurs potentiellement hétérogènes. Enfin, le document « Reflection on a Legacy Transaction Processing Monitor » (Roger Barga et Calton Pu, Proceeding Reflection '96, 1996, XP002561100) décrit la création d'adaptateurs transactionnels (*transaction adapters*) dans un environnement propriétaire.

Par conséquent, il existe un besoin de porter des applications existantes d'un monde transactionnel *mainframe* de type propriétaire vers un environnement transactionnel de type ouvert permettant notamment de faire évoluer ces applications, voire d'intégrer ces applications dans de nouvelles applications.

Il existe également un besoin d'applications s'exécutant dans un environnement d'exécution transactionnel de type ouvert, dont une partie de ces applications est formée de composants logiciels développés pour un environnement d'exécution transactionnel de type ouvert et une autre partie est formée de composants logiciels développés pour un environnement d'exécution transactionnel de type propriétaire, notamment afin d'une part de permettre la réutilisation de composants déjà développés pour des environnements d'exécution transactionnels de type propriétaire et d'autre part de permettre une évolution de ces composants et plus généralement une évolution de ces applications.

L'invention permet de résoudre au moins un des problèmes exposés précédemment.

L'invention a ainsi pour objet un dispositif pour l'exécution d'au moins une transaction dans un système de traitement de transactions comprenant un moniteur transactionnel exécutable dans un environnement d'exécution de type ouvert, c'est-à-dire dont les spécifications techniques sont publiques, ladite au moins une transaction étant exécutée par l'exécution séquentielle d'une pluralité de composants transactionnels. Ledit moniteur transactionnel comporte une mémoire de travail comportant des données associées au contexte d'exécution de l'au moins une transaction. Le dispositif comprend un container mis en œuvre dans l'environnement d'exécution de type ouvert, ledit container comportant :
- un connecteur pour recevoir dudit moniteur transactionnel au moins une commande d'exécution d'au moins un composant transactionnel de ladite pluralité de composants transactionnels, ledit au moins un composant transactionnel étant développé pour un environnement d'exécution de type propriétaire, c'est-à-dire que le composant est développé pour s'exécuter sur des machines spécifiques, distinct dudit environnement d'exécution de type ouvert ; et,
- un moteur d'exécution pour créer un espace d'exécution de type propriétaire, ledit moteur d'exécution étant configuré pour aller chercher lesdites données associées au contexte d'exécution de la transaction dans la mémoire de travail du moniteur transactionnel, puis exécuter ledit au moins un composant transactionnel dans ledit espace d'exécution de type propriétaire créé.

Ainsi, le moteur d'exécution permet, via le connecteur, d'exécuter dans un environnement d'exécution de type ouvert, le composant transactionnel développé pour l'environnement d'exécution de type propriétaire. Le dispositif selon l'invention permet ainsi l'évolution d'un système transactionnel de type *mainframe* vers un système de type ouvert tout en conservant des applications transactionnelles existantes, notamment des applications écrites en langage COBOL ou C développées pour des environnements d'exécution de type propriétaire.

Le dispositif selon l'invention permet en outre d'utiliser un moteur transactionnel indépendant de la plateforme matérielle mise en œuvre ainsi que d'utiliser un moteur transactionnel indépendant du serveur d'applications mis en œuvre.

Selon un mode de réalisation particulier le moteur d'exécution comprend un module de gestion de communication pour lire et/ou écrire au moins une donnée dans ladite mémoire de travail, ladite au moins une donnée étant utilisée pour exécuter au moins une partie de ladite au moins une transaction.

Le dispositif selon l'invention permet ainsi de conserver la logique transactionnelle et les mécanismes transactionnels du système d'origine, par exemple des mécanismes de chaînage des routines de traitement de transactions et d'activation de services.

De façon avantageuse, le moteur d'exécution comprend un module de gestion du contexte d'exécution de ladite au moins une transaction.

Toujours selon un mode de réalisation particulier, le dispositif comprend en outre des moyens pour exécuter au moins un second composant transactionnel de ladite pluralité de composants transactionnels, distinct dudit au moins un composant transactionnel appelé premier composant transactionnel, ledit au moins second composant transactionnel étant développé pour ledit environnement d'exécution de type ouvert.

Le dispositif selon l'invention permet ainsi l'évolution d'applications transactionnelles existantes, notamment d'applications écrites en langage COBOL ou en langage C, vers des applications exécutables dans un environnement d'exécution de type ouvert, par exemple des applications Java, de façon progressive.

Toujours selon un mode de réalisation particulier, ledit moniteur transactionnel comprend des moyens de communication pour échanger des données avec un système extérieur, lesdits moyens de communication étant adaptés à recevoir une commande pour l'exécution d'au moins une partie de ladite au moins une transaction. Le dispositif selon l'invention permet ainsi de recevoir des commandes d'exécution depuis un poste client gérant au moins une partie de l'exécution de ladite transaction.

De façon avantageuse, le dispositif comprend en outre un gestionnaire de services adapté à recevoir une séquence d'identifiants de composants transactionnels et à transmettre séquentiellement des commandes d'exécution des composants transactionnels correspondant à chacun desdits identifiants reçus. Le dispositif selon l'invention est ainsi en mesure de gérer l'exécution de transactions faisant appel à des services.

Selon un mode de réalisation particulier, le dispositif comprend en outre des moyens de connexion adaptés à transmettre une commande d'exécution, reçue d'un composant transactionnel quelconque de ladite au moins une transaction, à au moins une application externe. Le dispositif selon l'invention est ainsi capable de faire appel à des applications extérieures pour exécuter au moins une partie d'une transaction

Toujours selon un mode de réalisation particulier, lesdits moyens de connexion sont compatibles avec une architecture offrant des services de type client/serveur entre des applications exécutées dans des environnements différents. Le dispositif selon l'invention peut ainsi être intégré dans une architecture ouverte mettant en œuvre, par exemple, la technologie ESB (signe de Enterprise Services Bus en terminologie anglo-saxonne), permettant à des applications externes d'accéder à des applications utilisant des composants transactionnels développés pour un environnement d'exécution de type propriétaire.

Toujours selon un mode de réalisation particulier, ledit environnement d'exécution de type ouvert comprend un serveur d'applications utilisé comme interface entre un système extérieur et ledit moniteur transactionnel.

L'invention a également pour objet un procédé d'exécution d'au moins une transaction dans un système comprenant au moins un moniteur transactionnel exécutable dans un environnement d'exécution de type ouvert, c'est-à-dire dont les spécifications techniques sont publiques, ladite au moins une transaction étant exécutée par l'exécution séquentielle d'une pluralité de composants transactionnels. Le procédé comprend les étapes suivantes :
- réception, dudit moniteur transactionnel, d'au moins une commande d'exécution d'au moins un composant transactionnel de ladite pluralité de composants transactionnels, ledit au moins un composant transactionnel étant développé pour un environnement d'exécution de type propriétaire, c'est-à-dire que le composant est développé pour s'exécuter sur des machines spécifiques, distinct dudit environnement d'exécution de type ouvert ;
- création, dans un container mis en œuvre dans l'environnement d'exécution de type ouvert, d'un espace d'exécution de type propriétaire;
- chargement, par le moteur d'exécution, depuis une mémoire de travail du moniteur transactionnel, de données associées au contexte d'exécution de la transaction ; et,
- exécution dudit au moins un composant transactionnel dans ledit espace d'exécution créé.

Le procédé selon l'invention permet ainsi l'évolution d'un système transactionnel de type *mainframe* vers un système ouvert tout en conservant des applications transactionnelles existantes, notamment des applications écrites en langage COBOL ou C développées pour des environnements d'exécution de type propriétaire.

Le procédé selon l'invention permet en outre d'utiliser un moteur transactionnel indépendant de la plateforme matérielle mise en œuvre ainsi que d'utiliser un moteur transactionnel indépendant du serveur d'applications mis en œuvre.

Le procédé selon l'invention permet de conserver la logique transactionnelle et les mécanismes transactionnels du système d'origine, par exemple des mécanismes de chaînage des routines de traitement de transactions et d'activation de services.

Toujours selon un mode de réalisation particulier, le procédé comprend en outre une étape d'exécution d'au moins un second composant transactionnel de ladite pluralité de composants transactionnels, distinct dudit au moins un composant transactionnel appelé premier composant transactionnel, ledit au moins second composant transactionnel étant développé pour ledit environnement d'exécution de type ouvert. Le procédé selon l'invention permet ainsi l'évolution d'applications transactionnelles existantes, notamment d'applications écrites en langage COBOL ou en langage C, vers des applications exécutables dans un environnement d'exécution de type ouvert, par exemple des applications Java, de façon progressive.

Avantageusement, le procédé comprend en outre une étape de réception d'au moins une commande pour l'exécution de ladite au moins une transaction pour permettre l'exécution d'une transaction depuis un poste distant.

Selon un mode de réalisation particulier, le procédé comprend en outre une étape de transmission d'au moins une commande d'exécution reçue d'un composant transactionnel quelconque de ladite au moins une transaction pour exécuter une application externe audit moniteur transactionnel. Le procédé selon l'invention est ainsi capable de faire appel à des applications extérieures pour exécuter au moins une partie d'une transaction.

L'invention a également pour objet un programme d'ordinateur comprenant des instructions adaptées à la mise en œuvre de chacune des étapes du procédé décrit précédemment lorsque ledit programme est exécuté sur un ordinateur ainsi que des moyens de stockage d'informations, amovible ou non, partiellement ou totalement lisible par un ordinateur ou un microprocesseur comportant des instructions de code d'un programme d'ordinateur pour l'exécution de chacune des étapes du procédé décrit précédemment. Les avantages procurés par ce programme d'ordinateur et ces moyens de stockage sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 représente schématiquement un exemple d'architecture en couches d'un environnement d'exécution logiciel de type ouvert, permettant d'exécuter une transaction qui peut faire appel à des composants transactionnels développés pour un environnement d'exécution de type ouvert et à des composants transactionnels développés pour un environnement d'exécution de type propriétaire ;
- la figure 2 illustre plus précisément l'architecture mise en œuvre dans un serveur d'applications de type ouvert pour exécuter des transactions mis en œuvre par des composants transactionnels développés pour un environnement d'exécution de type propriétaire, accessibles via un container ;
- la figure 3 illustre schématiquement un exemple d'algorithme de traitement des composants transactionnels d'une transaction ;
- la figure 4 illustre un exemple de traitement de l'enchaînement de deux routines de traitement de transactions appelées TPRs (sigle de *transaction processing routines* en terminologie anglo-saxonne), par un moniteur transactionnel, dans lequel la première routine TPR a été programmée pour un environnement d'exécution de type propriétaire tandis que la seconde routine TPR a été développée pour un environnement d'exécution de type ouvert ;
- la figure 5 illustre un exemple d'implémentation de l'invention dans un contexte transactionnel selon lequel les transactions sont totalement gérées par un moniteur transactionnel et par les routines TPR ;
- la figure 6 illustre un exemple d'implémentation de l'invention dans un contexte transactionnel selon lequel les transactions sont gérées partiellement par un serveur d'applications et partiellement par un poste client ;
- la figure 7 illustre schématiquement un environnement mettant en œuvre la technologie ESB (signe de *Enterprise Services Bus* en terminologie anglo-saxonne), permettant à des applications externes d'accéder à des applications utilisant des composants transactionnels développés pour un environnement d'exécution de type propriétaire, par exemple des composants C ou Cobol conçus pour des systèmes de type *mainframe* et permettant à ces derniers d'accéder à des applications externes ; et,
- la figure 8 illustre un dispositif adapté à mettre en œuvre l'invention.

De façon générale, l'invention a pour objet de permettre l'exécution de composants transactionnels développés pour un environnement d'exécution de type propriétaire dans un environnement de type ouvert. En outre, l'invention permet l'exécution de transactions dont une partie des composants transactionnels ont été développés pour un environnement d'exécution de type ouvert tandis que d'autres composants transactionnels ont été développés pour un environnement d'exécution de type propriétaire.

Il convient tout d'abord de rappeler qu'une transaction peut être composée d'un composant transactionnel aussi appelé routine de traitement de transactions ou TPR (sigle de *Transaction Processing Routine* en terminologie anglo-saxonne) ou d'une pluralité de composants transactionnels (routines TPRs).

L'enchaînement de routines TPRs est géré par chacune des routines TPRs, chaque routine TPR faisant elle-même appel ou non à une routine TPR suivante.

Alternativement, l'enchaînement de routines, notamment de routines de services, est réalisé par un gestionnaire de services selon une séquence donnée.

Dans la suite de la description, un composant transactionnel désigne une routine (TPR) ou un service. Un composant transactionnel peut également désigner un ensemble de routines ou de services.

Il existe par ailleurs différentes implémentations de systèmes transactionnels variant, en particulier, selon la répartition des tâches entre le système transactionnel central et les postes clients.

A titre d'illustration, le système transactionnel TDS (sigle de *Transaction Driven System* en terminologie anglo-saxonne) et le système transactionnel TP8 (sigle de *Transaction Processing on GCOS* 8 en terminologie anglo-saxonne), mis en œuvre sur les systèmes d'exploitation GCOS (sigle de *General Comprehensive Operating System* en terminologie anglo-saxonne), proposés par la société Bull, utilisent une architecture centralisée intégrant la gestion complète des transactions (TDS, TP8 et GCOS sont des marques). Les postes clients faisant appel à de tels systèmes sont des clients légers. En effet, pour s'adresser au système transactionnel s'exécutant sur un serveur distant, le poste client ne dispose que d'une simple interface client.

Alternativement, il existe des systèmes tels que Tuxedo (Tuxedo est une marque), commercialisé par la société ORACLE/BEA, mis en œuvre sur des systèmes d'exploitation ouvert tels que Unix (Unix est une marque), selon lesquels une partie de la gestion des transactions est réalisée dans les postes clients, appelés postes lourds.

Le moniteur transactionnel gère les ressources et garantit la synchronisation, la cohérence des transactions et l'intégrité des données. Ses fonctions de base sont, par exemple, les fonctions appelées *rollback* et *commit.*

La fonction *rollback* permet, dans un contexte défini, d'annuler l'ensemble des opérations d'une transaction qui viennent d'être réalisées pour remettre les données manipulées par ces opérations dans leur état initial. Pour ce faire, il est utilisé une image des données avant modification mémorisée dans un journal de transactions. Cette fonction est l'inverse du *commit.*

La fonction *commit* a pour objet de valider les opérations effectuées sur les données d'une transaction. Après l'exécution de la fonction *commit,* les informations et données traitées par une transaction sont disponibles pour les autres transactions.

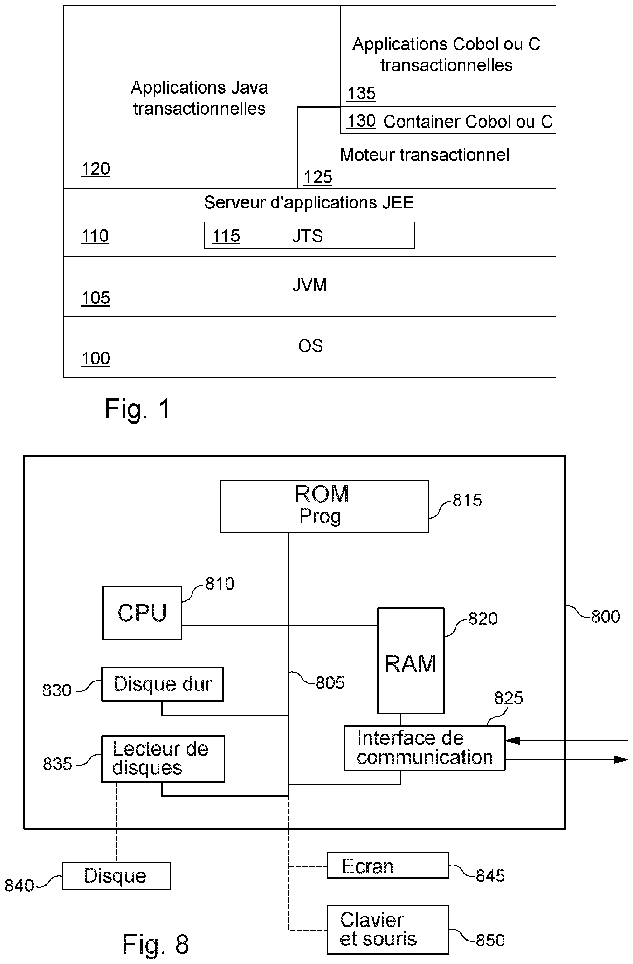

La figure 1 représente schématiquement un exemple d'architecture en couches dans un environnement logiciel de type ouvert, par exemple dans un environnement Java, permettant d'exécuter une transaction qui peut faire appel à des composants transactionnels mis en œuvre dans un environnement d'exécution de type ouvert et à des composants transactionnels développés pour un environnement d'exécution de type propriétaire.

L'architecture est ici basée sur un système d'exploitation de type ouvert 100, aussi appelé OS (sigle d'*Operating System* en terminologie anglo-saxonne), par exemple Linux (Linux est une marque).

Une machine virtuelle est installée sur ce système d'exploitation pour permettre l'interprétation d'applications dont le développement est indépendant de la machine physique sur laquelle elles sont exécutées. La machine virtuelle utilisée ici est la machine virtuelle Java 105, aussi appelée JVM (sigle de *Java Virtual Machine* en terminologie anglo-saxonne), par exemple la JVM de Sun Microsystems (JVM et Sun Microsystems sont des marques).

La JVM 105 est notamment utilisée pour permettre l'exécution d'un serveur d'applications 110, par exemple le serveur d'applications conforme à la norme JEE JOnAS (sigle de *Java OpeN Application Server* en terminologie anglo-saxonne) ou JBoss (JOnAS et JBoss sont des marques) ou tout autre serveur d'applications JEE. Il est rappelé ici qu'un serveur d'applications est une application logicielle, occupant une couche centrale dans une architecture multicouche, qui a notamment pour objet de permettre l'exécution sur le serveur d'applications utilisées par des postes clients. Les applications sont ainsi exécutées sur le serveur tandis que les interfaces hommes-machines sont exécutées sur les postes clients.

Le serveur d'applications 110 comprend notamment des services transactionnels 115, appelés JTS (sigle de *Java Transaction Services* en terminologie anglo-saxonne) dans la norme JEE. Ces services 115 implémentent, par exemple, les fonctions *commit* et *rollback* précédemment décrites.

Le serveur d'applications 110 est également utilisé, ici, comme interface avec un moteur transactionnel 125 utilisé lui-même comme interface avec des applications transactionnelles Java 120 et des applications transactionnelles 135 développées pour un environnement d'exécution de type propriétaire développées pour être exécutées sur des systèmes de type *mainframe.*

L'exécution d'applications transactionnelles 135 développées en langage COBOL ou en langage C pour un environnement d'exécution de type propriétaire est réalisée via un container Cobol ou C 130.

Le moteur transactionnel 125 et le container Cobol ou C 130 permettent d'exécuter des applications transactionnelles développées en langage COBOL ou en langage C pour un environnement d'exécution de type propriétaire (135), à côté d'applications transactionnelles développées en JAVA, tel qu'illustré dans l'architecture représentée sur la figure 1.

Il permet également d'exécuter des transactions faisant appel à des composants transactionnels développés pour un environnement d'exécution de type ouvert et d'autres développées pour un environnement d'exécution de type propriétaire.

Il est à noter qu'il est également possible d'exécuter des applications ou composants transactionnels développés en tout autre langage en utilisant le ou les containers adaptés.

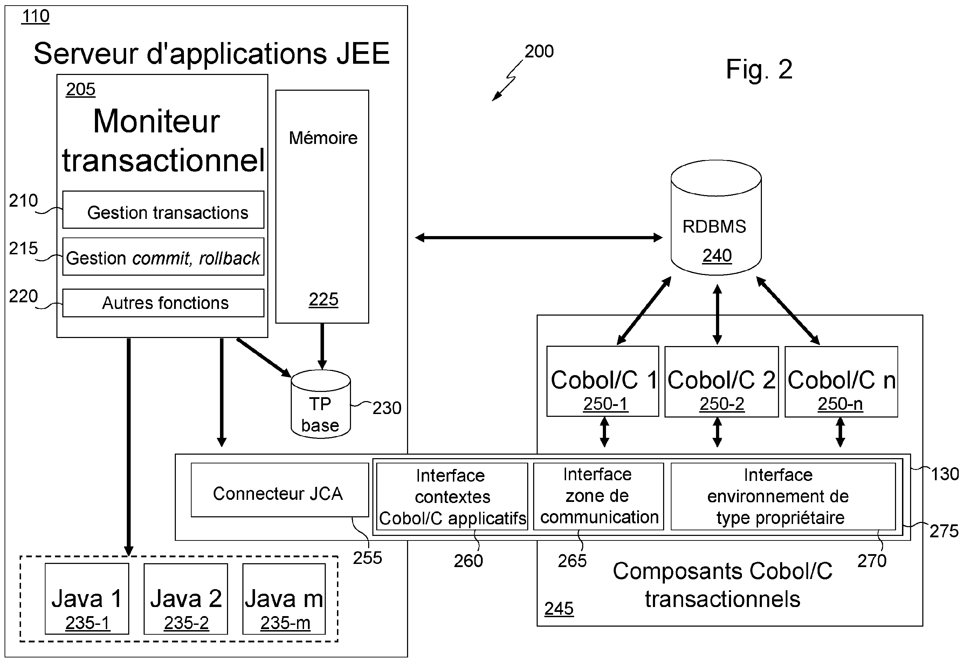

La figure 2 illustre plus précisément l'architecture 200 mise en œuvre dans un serveur d'applications de type ouvert, par exemple JEE, pour exécuter des transactions comprenant des composants transactionnels développés pour un environnement d'exécution de type propriétaire, accessibles via un container.

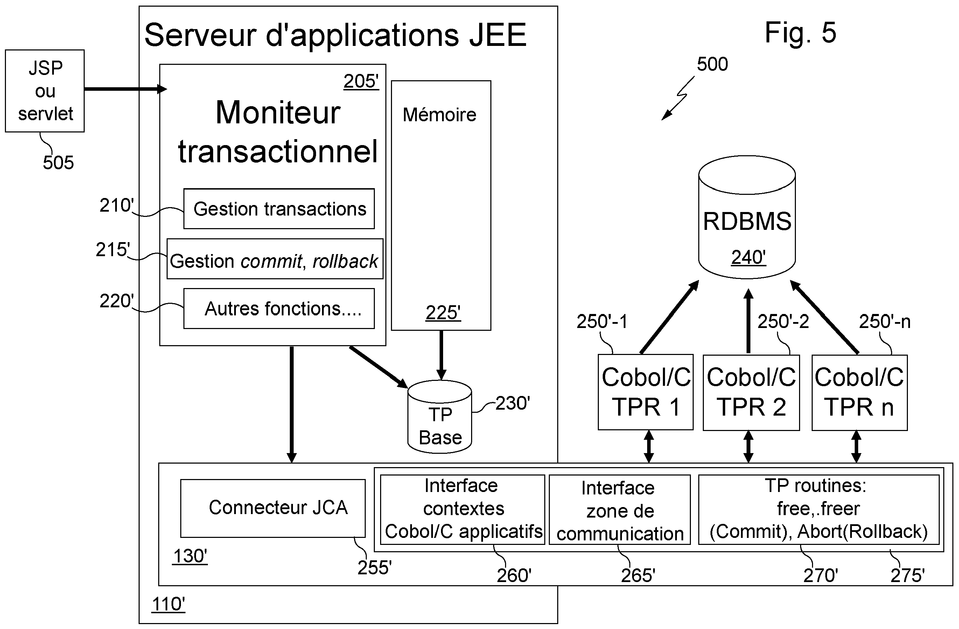

Les transactions, et plus généralement les fonctions mises en œuvre dans l'architecture 200, peuvent être appelées de l'extérieur par un client léger, un poste lourd ou un service, notamment un service web, comme décrit en référence aux figures 5, 6 et 7.

Le serveur d'applications 110 comprend un moniteur transactionnel 205 comprenant lui-même un module 210 de gestion des transactions, un module 215 de gestion des fonctions de traitement des transactions, en particulier, les fonctions *commit* et *rollback,* et un module 220 de gestion des autres fonctions nécessaires à l'exécution des transactions (par exemple la gestion de l'enchaînement de routines TPR ou services et la gestion des contextes d'exécution des routines TPR ou services).

Le serveur d'applications 110 comprend également une mémoire de travail 225 adaptée, notamment, à mémoriser le contexte d'exécution ainsi qu'une base de données 230 utilisée, en particulier, pour la gestion des contextes d'exécution, la reprise de configurations transactionnelles en cas d'échec d'une transaction et la mémorisation des informations de configuration de l'environnement transactionnel.

Le serveur d'applications 110 comprend en outre des composants transactionnels développés pour l'environnement d'exécution de type ouvert Java, par exemple les composants transactionnels Java 235-1, 235-2 et 235-m.

Les données traitées par les transactions exécutées à partir du serveur d'applications 110 sont ici mémorisées dans une base de données du système de gestion de base de données 240 de type RDBMS (sigle de *Relational DataBase Management System* en terminologie anglo-saxonne).

Les applications transactionnelles COBOL ou C référencées 135 sur la figure 1 comprennent des composants transactionnels écrits en langage COBOL ou en langage C. Ces composants sont par exemple des composants transactionnels développés pour un environnement d'exécution de type propriétaire, par exemple des TPRs dans l'environnement GCOS ou des services dans l'environnement Tuxedo. Ces composants transactionnels sont représentés par la référence 245 sur la figure 2. Ils comprennent, en particulier, les composants 250-1, 250-2 et 250-n qui peuvent notamment accéder au système de gestion de base de données 240.

Le moniteur transactionnel 205 peut accéder directement aux composants transactionnels 235-1 à 235-m développés pour un environnement d'exécution de type ouvert Java. Il peut également accéder aux composants transactionnels 250-1 à 250-n développés en langage COBOL pour un environnement d'exécution de type propriétaire via le container Cobol 130.

Le moniteur transactionnel 205 est développé de telle sorte à assurer les fonctions ACID des environnements transactionnels GCOS et dans tout autre environnement transactionnel.

Le container Cobol 130 comprend plusieurs modules tels qu'illustré en Figure 2. En particulier, le container Cobol 130 comprend un connecteur JCA (sigle de *Java Connector Architecture* en terminologie anglo-saxonne) 255, un module 260 de gestion du contexte d'exécution, un module 265 de gestion de communication et un module 270 d'interface avec les composants transactionnels développés en langage COBOL ou en langage C (ou dans tout autre langage) pour un environnement d'exécution de type propriétaire.

Le connecteur JCA 255 a notamment pour objet de fournir l'interface d'exécution et d'interaction avec les composants transactionnels COBOL ou C (ou autre) et d'assurer l'interface des fonctions d'exécution transactionnels JEE en mode XA (interface de communication entre un gestionnaire de ressource et un gestionnaire de transaction) ou *LocalTransaction,* par exemple les fonctions *Commit* et *Rollback*, aptes à être utilisées directement par le serveur d'application JEE 110. Ces fonctions sont propagées aux ressources (une ressource étant, par exemple, une connexion à une base de données) impliquées dans la transaction. Ce connecteur incorpore également une interface spécifique d'appel des composants transactionnels Cobol ou C (ou autre), il s'agit notamment d'une interface standard d'appel des fonctions natives, par exemple l'interface JNI (sigle de *Java Native Interface* en terminologie anglo-saxonne) de JAVA ou l'interface TCP (sigle de *Transport Communication Protocol* en terminologie anglo-saxonne).

Le module 260 de gestion du contexte d'exécution est utilisé pour conserver l'environnement d'exécution des composants transactionnels COBOL et C (ou autre) développés pour un environnement d'exécution de type propriétaire en fonction de l'environnement transactionnel d'origine et/ou de l'environnement d'exécution défini par le moniteur transactionnel 205. Ce module est également utilisé pour mettre à jour l'environnement d'exécution défini par le moniteur transactionnel 205 en fonction des résultats d'exécution des composants transactionnels développés pour un environnement d'exécution de type propriétaire.

Le module 265 de gestion de communication permet l'échange de données entre l'environnement du serveur d'applications JEE 110 et l'environnement d'exécution des composants transactionnels développés pour un environnement d'exécution de type propriétaire. Il permet, en particulier, d'échanger des données entre la mémoire 225 et les composants transactionnels Cobol et C (ou autre) génériquement référencées 250.

Le module 270 d'interface avec les composants transactionnels développés pour un environnement d'exécution de type propriétaire a notamment pour objet de traiter les fonctions spécifiques de ces composants. Les fonctions spécifiques sont ici des fonctions proposées par l'environnement d'exécution de type propriétaire (par exemple, l'ensemble des API, sigle de *Application Programming Interface* en terminologie anglo-saxonne, du moteur d'exécution de l'environnement d'exécution de type propriétaire) pour lequel ont été conçus les composants transactionnels développés pour cet environnement mais dont l'équivalent n'existe pas dans l'environnement de type ouvert fourni par le serveur d'applications 110.

Le container Cobol ou C 130 met en œuvre un mécanisme multitâche, aussi appelé *multithread* en terminologie anglo-saxonne pour traiter simultanément plusieurs transactions.

Les modules 260, 265 et 270 forment un moteur d'exécution 275 aussi appelé *runtime* en terminologie anglo-saxonne, permettant d'exécuter les composants transactionnels Cobol et C (ou autre) dans un système d'exploitation ne pouvant traiter directement ces composants. En d'autres termes, le moteur d'exécution 275 forme un espace d'exécution de type propriétaire permettant l'exécution, dans un environnement d'exécution de type ouvert, de composants transactionnels développés pour un environnement d'exécution de type propriétaire.

Notamment, ce moteur d'exécution va permettre, via le connecteur JCA 255, d'exécuter dans un environnement d'exécution de type ouvert, notamment JAVA, ces composants transactionnels Cobol et C (ou autre) développés pour un environnement d'exécution de type propriétaire.

Le moteur d'exécution permet aussi l'exécution des composants développés notamment en Java.

En outre, le moteur transactionnel 205 fait appel également au moteur d'exécution 275 pour le pilotage des composants transactionnels hétérogènes incluant, par exemple, des composants transactionnels C et Cobol.

Pour ce faire, le moteur d'exécution créé un espace d'exécution, notamment pour gérer les informations nécessaires à l'exécution des composants, incluant la reprise de contexte en cas de problème.

Le code Cobol, C ou autre est compilé selon les caractéristiques propres du moteur d'exécution utilisé qui peut être, par exemple, celui de la société Micro Focus pour Cobol.

Ainsi, selon le présent mode de réalisation, les composants transactionnels 250, sont exécutés à l'aide du moteur d'exécution 275 dans un environnement d'exécution de type ouvert (Java selon la Figure 2).

Comme le container Cobol ou C 130, il est possible d'utiliser un container particulier pour un autre langage, ayant une structure similaire à la structure du container Cobol ou C 130, pour exécuter des composants transactionnels écrits dans ce langage

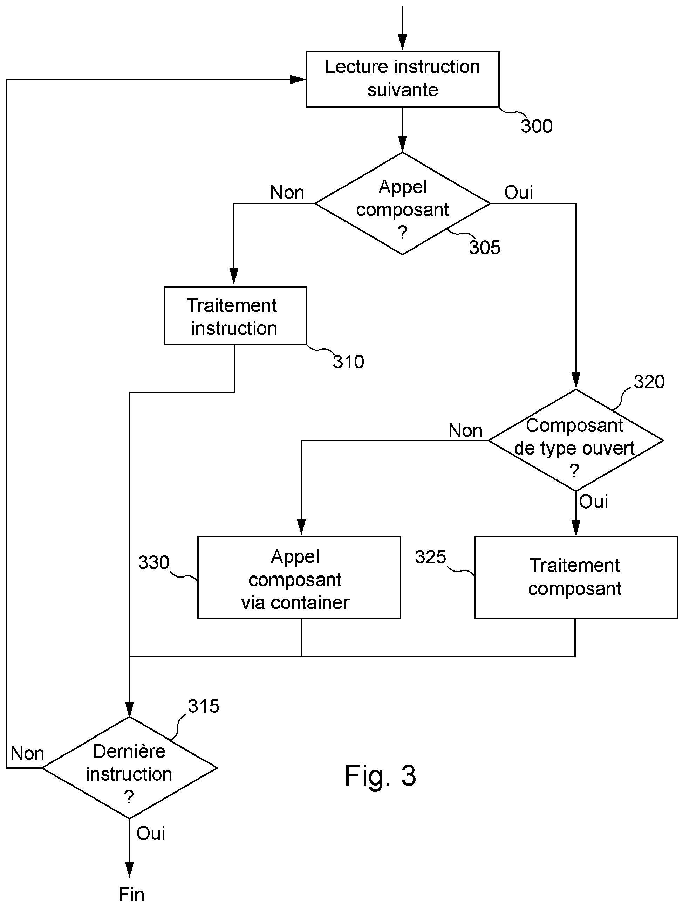

La figure 3 illustre schématiquement un exemple d'algorithme de traitement des composants transactionnels. Les composants transactionnels sont ici traités les uns après les autres. Cet algorithme est, par exemple, exécuté dans le module 210 de gestion des transactions illustré sur la figure 2.

Une première étape (étape 300) a pour objet de lire la prochaine instruction. Celle-ci correspond à la première instruction lorsque le traitement de la transaction commence ou à l'instruction qui suit l'instruction en cours de traitement lorsque la première instruction a été traitée.

Une étape suivante consiste en un test pour déterminer la nature de l'instruction (étape 305) et plus particulièrement si l'instruction est un appel à un composant transactionnel tel qu'une routine TPR ou un service. Si l'instruction ne correspond pas à un appel à un composant transactionnel, elle est traitée de façon standard (étape 310).

Un test est alors effectué pour déterminer si l'instruction traitée est la dernière (étape 315). Dans l'affirmative, l'algorithme de traitement des instructions se termine. Si l'instruction traitée n'est pas la dernière, l'instruction suivante est sélectionnée pour être traitée à son tour (étape 300).

Si, à l'étape 305, l'instruction correspond à un appel à un composant transactionnel, un test est effectué pour déterminer si le composant est un composant transactionnel mis en œuvre dans un environnement d'exécution de type ouvert ou un composant transactionnel développé pour un environnement d'exécution de type propriétaire (étape 320).

Si le composant transactionnel a été développé pour un environnement d'exécution de type ouvert, il est traité de façon standard dans cet environnement (étape 325), sans utiliser le container 130.

Si, au contraire, le composant transactionnel a été développé pour un environnement d'exécution de type propriétaire, ce composant est appelé à travers un container (étape 330), par exemple le container Cobol ou C 130 si ce composant utilise le langage Cobol ou le langage C, pour être exécuté par le moteur d'exécution 275, dans l'environnement d'exécution de type ouvert.

L'étape 315 suit les étapes 325 et 330 au cours de laquelle un test est alors effectué pour déterminer si l'instruction traitée, correspondant à un appel de composant, est la dernière. Dans l'affirmative, l'algorithme de traitement des instructions se termine. Si l'instruction traitée n'est pas la dernière, l'instruction suivante est sélectionnée pour être traitée à son tour.

Comme illustré sur la figure 3, les composants transactionnels sont traités les uns à la suite des autres, sans interaction directe entre chaque composant. Il est par conséquent possible, dans une transaction, de faire appel à des composants transactionnels développés pour un environnement d'exécution de type ouvert et à des composants transactionnels développés pour un environnement d'exécution de type propriétaire.

Ainsi, une application transactionnelle développée pour un environnement d'exécution de type propriétaire et faisant appel à plusieurs composants transactionnels développés dans un environnement d'exécution de type propriétaire peut être exécutée dans un environnement d'exécution de type ouvert. De plus, il est possible de porter, modifier, ou réécrire les composants écrits notamment en langage Cobol ou en langage C, vers un langage de type Java, facilitant ainsi l'évolution d'une application développée dans un environnement de type *mainframe* vers un système d'exécution de type ouvert. De plus, un retour en arrière (de Java vers Cobol ou C) est toujours possible si le portage d'un ou de plusieurs composants engendre des problèmes.

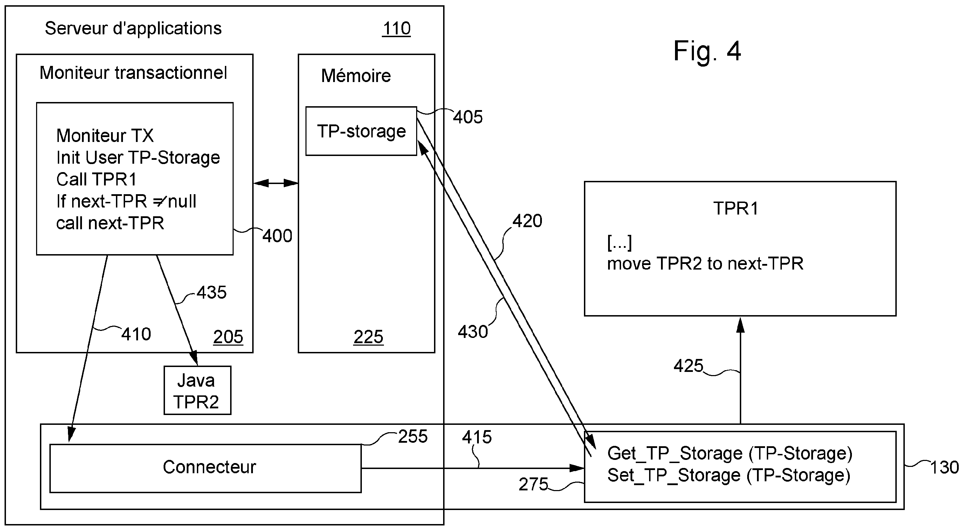

Selon un mode de réalisation particulier, des structures de données partagées sont utilisées pour réaliser le partage des données et faciliter le portage applicatif. Un exemple d'une telle structure est la structure appelée ici *TP-storage* (référencée 405 sur la Figure 4), qui permet l'échange des données entre l'environnement d'exécution de type ouvert et le moteur d'exécution 275 pour exécuter les composants transactionnels développés pour un environnement d'exécution de type propriétaire.

Cette structure comprend, par exemple un champ appelé *next-TPR* indiquant l'identifiant de la prochaine routine TPR à exécuter, ainsi que des indicateurs *commit* et *rollback,* utilisés pour indiquer la réussite ou l'échec de l'exécution de la routine TPR. Cette structure est utilisée, par exemple, par les composants transactionnels développés pour un environnement d'exécution de type propriétaire devant être exécutés dans l'environnement d'exécution de type ouvert.

Cette structure comprend en outre une pluralité de zones de partage de données.

Des fonctions d'échange de données sont utilisées dans le moteur d'exécution 275 pour échanger des données entre un composant transactionnel développés pour un environnement d'exécution de type propriétaire, par exemple une routine TPR écrite en langage Cobol, et la mémoire du moniteur transactionnel 225. Ses échanges sont rendus possibles notamment via l'interface JNI compris dans le connecteur 255. Ainsi, des fonctions du type *Get_TP_Storage* et *Set_TP_Storage* peuvent être utilisées dans le moteur d'exécution 275 pour accéder aux données mémorisées dans la zone de travail du moniteur transactionnel (référencée 405 sur la figure 4) ou pour y écrire des données, respectivement.

A titre d'illustration, un mécanisme permettant d'appeler une seconde routine TPR, appelée *TPR2,* à partir d'une première routine TPR, appelée *TPR1* et écrite en Cobol, est brièvement décrit ici.

Il est tout d'abord rappelé que la routine TPR appelée *TPR2,* bien qu'étant ici un composant transactionnel développé pour un environnement d'exécution de type ouvert, pourrait aussi être un composant transactionnel développé pour un environnement d'exécution de type propriétaire. La première routine TPR (*TPR1*) n'ayant pas connaissance du type de composant appelé, il convient donc de transférer cet appel au moniteur transactionnel. Ainsi, l'appel à une routine TPR est réalisé via des données partagées, notamment via une fonction Cobol de type « *move TPR2 to next-TPR* »*.*

La figure 4 illustre un tel exemple d'appel d'une seconde routine TPR par une première routine TPR développée dans un environnement d'exécution de type propriétaire.

Le moniteur transactionnel 205 gère ici une transaction mise en œuvre par les instructions 400 dont le traitement est, par exemple, conforme à celui décrit précédemment en référence à la figure 3. La gestion des instructions 400 est, par exemple, réalisée par le module 210 de gestion des transactions de la figure 2. Il est notamment fait appel à la routine TPR *TPR1* (instruction « *call TPR1* »). La mémoire de travail 225, associée au moniteur transactionnel 205, comprend des données 405 dont la structure *TP-storage* est prédéterminée.

Après des étapes d'initialisation (instructions « *Moniteur TX* » et « *Init User TP-Storage* »), la transaction commence par l'exécution de la routine TPR *TPR1* (instruction « *call TPR1* »).

Cette routine TPR étant, dans cet exemple, en Cobol, le moniteur transactionnel 205 lance l'exécution de la routine TPR *TPR1* via le container Cobol 130. Pour ce faire, il est fait appel au connecteur 255 comprenant l'interface JNI permettant à la plateforme Java de faire un appel à une fonction COBOL et au moteur d'exécution 275 apte à exécuter du code écrit en langage COBOL (étapes 410 et 415). Avant de lancer l'exécution de la routine TPR *TPR1,* le moteur d'exécution 275 va chercher les données associées au contexte d'exécution de la transaction, en particulier les données appartenant à la structure de données *TP-storage 405*, dans la mémoire de travail 225 associée au moniteur transactionnel 205 avec la fonction *GET_TP_Storage* (étape 420). Ces données sont des données liées notamment au système ou à l'utilisateur.

La routine TPR *TPR1* est alors exécutée (étape 425). A la fin de son exécution, ou au cours de celle-ci, la valeur *TPR2* est écrite dans le champ *next-TPR* de la structure *TP-storage* 405, à l'aide de la fonction Cobol « *move* ». Après l'exécution de la routine TPR, le moteur d'exécution 275 met à jour les données de la structure *TP-storage* dans la mémoire 225, en particulier il est mis à jour la variable *next-TPR* à la valeur *TPR2* (étape 430) à l'aide de la fonction *SET_TP_Storage.*

Après l'exécution de l'instruction « *call TPR1* » du jeu d'instructions 400, l'instruction suivante « *if next-TPR* # *null call Next-TPR* » est exécutée. Cette instruction a pour fonction de tester la valeur de la variable next-TPR. Si cette variable est différente de la valeur nulle alors une nouvelle routine TPR doit être exécutée.

Dans l'exemple de la figure 4, la variable *next-TPR* étant égale à *TPR2* en raison de la commande « *move TPR2 to next-TPR* » exécutée par la routine *TPR1* et de la fonction *SET_TP_Storage* exécutée par le moteur d'exécution, la routine TPR *TPR2* est alors activée par le moniteur transactionnel (étape 435).

Dans le présent exemple, la routine TPR *TPR2* a été mise en œuvre dans un environnement d'exécution de type ouvert, à savoir JAVA, son exécution sera contrôlée par le moteur transactionnel 205.

Ce mécanisme permet de conserver la logique transactionnelle au travers de la gestion de l'enchaînement des TPRs comme dans les systèmes de type *mainframe* tels que TP8, TDS ou autres.

De la même façon, des services peuvent être appelés par le moniteur transactionnel 205.

La figure 5 illustre un exemple d'implémentation de l'invention dans un contexte transactionnel selon lequel les transactions sont totalement gérées par le moniteur transactionnel.

De façon similaire à l'architecture 200 illustrée sur la figure 2, l'architecture 500 met en œuvre un serveur d'applications JEE 110' comprenant, en particulier, un moniteur transactionnel 205', une mémoire de travail 225' ainsi qu'une base de données 230'.

De même, le moniteur transactionnel 205' comprend un module 210' de gestion des transactions, un module 215' de gestion des fonctions de traitement des transactions, en particulier, les fonctions *commit* et *rollback,* et un module 220' de gestion des autres fonctions nécessaires à l'exécution de transactions.

Le serveur d'applications 110' comprend en outre des composants transactionnels développés pour l'environnement d'exécution de type ouvert Java (non représentés).

Le serveur d'applications 110' peut être accédé par un client léger 505 mettant en œuvre, par exemple, la technologie JSP (sigle de *Java Server Pages* en terminologie anglo-saxonne) ou *servlet.*

Il est rappelé ici que la technologie JSP, basée sur Java, permet de générer dynamiquement du texte HTML (sigle d'*HyperText Markup Language* en terminologie anglo-saxonne), XML (sigle d'*Extensible Markup Language* en terminologie anglo-saxonne) ou tout autre type de page web. Cette technologie peut ainsi être utilisée pour fournir une interface proposant d'accéder aux services distants, en particulier des transactions.

La technologie *servlet* permet de générer dynamiquement la présentation des données au sein d'un serveur http (sigle de *HyperText Transfer Protocol* en terminologie anglo-saxonne) et de les présenter, par exemple, au format HTML ou XML.

Les transactions gérées dans l'environnement 500 se présentent sous forme d'enchaînement de routines TPRs, une routine TPR appelant la suivante comme décrit précédemment. Le moniteur transactionnel ne gère donc pas l'enchaînement des routines, ce dernier étant géré par les routines elles-mêmes. Mais le moniteur transactionnel gère les transactions ou les ensembles de transactions appelés par le client léger 505.

Comme dans l'architecture 200, les données traitées par les transactions exécutées à partir du serveur d'applications 110' sont ici stockées dans une base de données du système de gestion de base de données 240' de type RDBMS.

Les informations concernant le contexte d'exécution d'une transaction sont mémorisées dans une mémoire partagée, écrites dans une base de données 230' et utilisées lors des reprises contextuelles, notamment en cas de retour arrière faisant suite à un échec d'une transaction.

La base de données 230' mémorise aussi les informations de configuration de l'environnement transactionnel.

Il est à noter que ce contexte est écrit dans la base de données 230' à chaque fonction de validation dans un composant transactionnel (fonction *commit*).

Le moniteur transactionnel 205' peut accéder directement aux composants transactionnels développés pour l'environnement d'exécution de type ouvert Java et aux composants transactionnels 250'-1 à 250'-n développés pour un environnement d'exécution de type propriétaire via le container Cobol ou C 130' comprenant les modules 255', 260', 265' et 270' dont les fonctions sont similaires aux modules 255, 260, 265 et 270.

Le moteur d'exécution 275' est adapté à traiter certaines routines spécifiques aux environnements d'exécution de type propriétaires pour permettre au moniteur transactionnel d'activer ces routines en dialoguant via la mémoire 225'. Il est également adapté à exécuter directement certaines fonctions spécifiques, par exemple les fonctions *TP_send* et *TP_receive.*

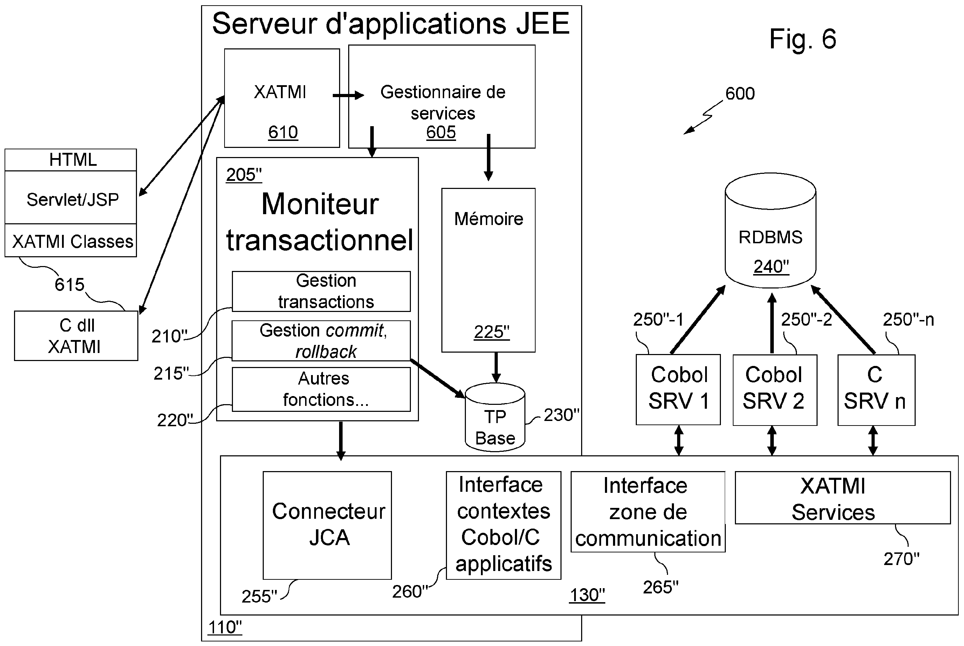

La figure 6 illustre un exemple d'implémentation de l'invention dans un contexte transactionnel selon lequel les transactions sont en partie gérées par le serveur d'applications et en partie par un poste client.

De façon similaire à l'architecture 200 illustrée sur la figure 2, l'architecture 600 met en œuvre un serveur d'application 110" comprenant, en particulier, un moniteur transactionnel 205", une mémoire de travail 225" ainsi qu'une base de données 230".

De même, le moniteur transactionnel 205" comprend un module 210" de gestion des transactions, un module 215" de gestion fonctions de traitement des fonctions, en particulier, les fonctions *commit* et *rollback,* et un module 220" de gestion des autres fonctions nécessaires à l'exécution de transactions. Il comprend également des services développés dans l'environnement d'exécution de type ouvert Java (non représentés).

Le serveur d'applications 110" comprend en outre un gestionnaire de services 605 permettant l'exécution synchrone ou asynchrone des services activés par le poste client et une interface 610 de type XATMI (sigle d'*X*/*Open Application to Transaction Manager Interface* en terminologie anglo-saxonne) comprenant par exemple les fonctions *tpcall* et *tpacall* permettant l'appel de services.

L'interface 610 est accessible par un poste client lourd 615 mettant également en œuvre une interface distante de type XATMI ou JXATMI (sigle de Java XATMI, implémentée par la société BULL) et utilisant, par exemple, la technologie JSP ou *servlet.* L'interface distante XATMI peut être mise en œuvre, dans le poste client, à l'aide de classes ou de dll (sigle de *Dynamic Link Library* en terminologie anglo-saxonne).

L'interface XATMI offre un mode d'accès de type requête/réponse.

Les transactions sont gérées depuis le poste client sous forme d'enchaînement de services dont les appels sont mémorisés dans une mémoire tampon du gestionnaire de service 605.

Les transactions gérées dans l'environnement 600 se présentent sous forme d'enchaînement de services, chacun des services étant appelé indépendamment des autres par le poste client via le gestionnaire de services ou par un autre service. Le moniteur transactionnel doit ainsi gérer l'appel de chaque service utilisé.

Comme dans l'architecture 200, les données traitées par les transactions exécutées à partir du poste client 615 et du serveur d'applications 110" sont ici mémorisées dans une base de données du système de gestion de base de données 240" de type RDBMS.

Le moniteur transactionnel 205" peut accéder directement aux services développés pour un environnement d'exécution de type ouvert Java et aux services C ou Cobol 250"-1 à 250"-n développés pour un environnement d'exécution de type propriétaire via le container 130" comprenant les modules 255", 260", 265" et 270" dont les fonctions sont similaires aux modules 255, 260, 265 et 270.

Il convient de remarquer ici que les services peuvent s'appeler directement les uns les autres à travers l'interface XATMI. Il n'est donc pas nécessaire de mettre en œuvre le mécanisme de gestion de l'enchaînement des composants transactionnels décrit précédemment, notamment en référence à la figure 4.

Les informations concernant la configuration de l'environnement transactionnel sont mémorisées dans une mémoire partagée et écrites dans une base de données 230".

Le mécanisme mis en œuvre dans l'architecture 600, décrite en référence à la figure 6, permet de conserver la logique transactionnelle au travers de la gestion des services comme dans les systèmes tels que Tuxedo et ENCINA (ENCINA est une marque).

Alors que les figures 5 et 6 visent deux implémentations distinctes liées à des gestions différentes des transactions, ces implémentations peuvent être intégrées dans un même système pour permettre le traitement de différents types de transactions.

Une architecture similaire aux architectures 200, 500 et 600 des figures 2, 5 et 6 peut également être utilisée pour donner accès, dans un environnement mettant en œuvre la technologie ESB (sigle d'*Enterprise Service Bus* en terminologie anglo-saxonne), à des applications de type propriétaire. Il est rappelé ici que l'ESB est une solution informatique de partage permettant à des applications non conçues pour fonctionner ensemble de communiquer entre elles.

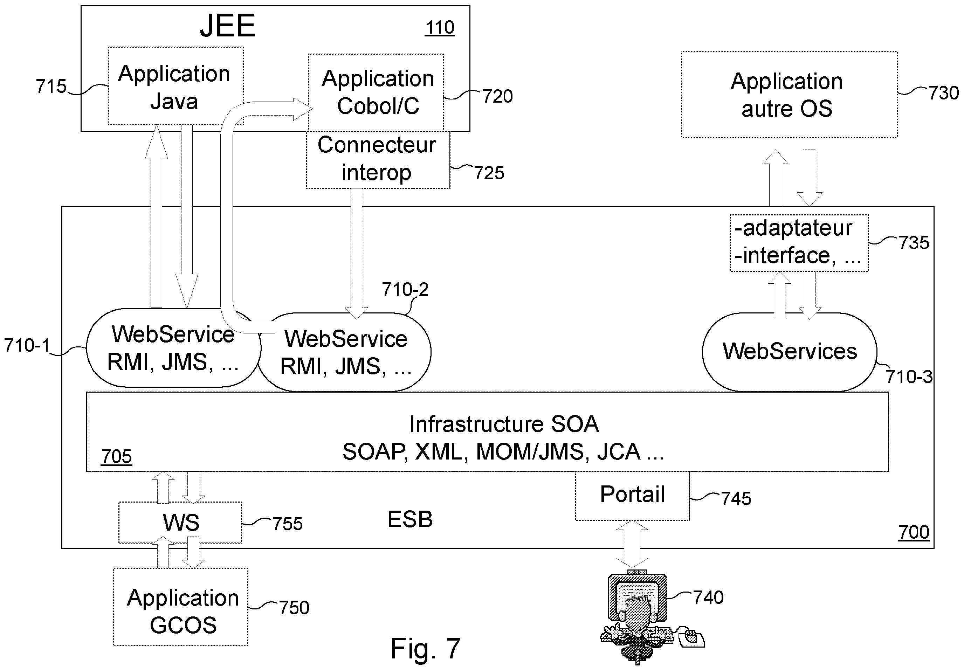

La figure 7 illustre schématiquement un environnement intégrant la technologie ESB, permettant à des applications externes d'accéder, de communiquer et d'interopérer avec des applications développées pour un environnement d'exécution de type propriétaire, par exemple des applications C ou Cobol conçues pour des systèmes de type *mainframe* ou non, et permettant à ces dernières d'accéder à des applications externes.

Le bus de services ESB 700 comprend ici une infrastructure 705 de type SOA (sigle de *Service Oriented Architecture* en terminologie anglo-saxonne) qui permet de donner l'accès à des applications selon un mode client/serveur.

L'infrastructure SOA 705 utilise, par exemple, les protocoles SOAP (sigle de *Simple Object Access Protocol* en terminologie anglo-saxonne), XML, MOM/JMS (sigle de *Message-Oriented Middleware* / *Java Message Service* en terminologie anglo-saxonne) et JCA (sigle de *JEE Connector Architecture* en terminologie anglo-saxonne) pour effectuer des échanges entre des applications ou entre des applications et des postes clients.

L'infrastructure SOA 705 met en œuvre des services, notamment les services web 710-1 à 710-3, aussi appelés *WebServices* en terminologie anglo-saxonne ou WS, utilisés comme interfaces vers des applications permettant l'interopérabilité de ces applications. Les services web 710-1 et 710-2, utilisés comme interfaces avec le serveur d'applications JEE 110, mettent en œuvre, par exemple, les API (sigle d'*Application Programming Interface* en terminologie anglo-saxonne) RMI (sigle de *Remote Method Invocation* en terminologie anglo-saxonne) et JMS. Le service web 710-1 permet ainsi d'accéder directement à des applications Java 715 du serveur d'applications 110.

Le service web 710-2 permet d'accéder à des applications 720 développés pour un environnement d'exécution de type propriétaire du serveur d'applications 110 et permet à ces applications d'accéder à l'infrastructure SOA 705 via un connecteur gérant l'interopérabilité 725.

Les applications 720 sont par exemple des applications Cobol transactionnelles accessibles à partir d'un container Cobol mis en œuvre dans le serveur d'applications 110 comme décrit précédemment.

Le connecteur gérant l'interopérabilité 725 est par exemple une interface WebService donnant un accès extérieur à des composants transactionnels Cobol ou C.

Le service web 710-3 permet d'accéder à des applications 730 basées sur un autre système d'exploitation via un adaptateur 735 spécifique au système d'exploitation ciblé.

L'infrastructure SOA 705 est accessible à un utilisateur 740 à travers le portail 745. Elle peut également être utilisée comme point d'entrée vers une application transactionnelle 750 telle que GCOS via un service web spécifique 755.

De façon générale, l'infrastructure SOA 705 permet à des applications exécutées dans des environnements différents de faire appel les unes aux autres.

Par exemple, une routine TPR ou un service d'une application Java 715 exécuté par le serveur d'applications 110 peut accéder à une application externe, exécutée sur un autre système d'exploitation, telle que l'application 730, via le service web 710-1, l'architecture SOA 705, le service web 710-3 et l'adaptateur 735. De la même façon, l'application externe 730 peut accéder à une application Java 715. Un tel accès est similaire à un accès effectué par un utilisateur à travers un poste client.

De façon similaire, une routine TPR ou un service d'une application Cobol 720 exécuté par le serveur d'applications 110, par exemple la routine TPR 250'-2 de la figure 5 ou le service 250"-2 de la figure 6, peut accéder à une application externe telle que l'application 730 via le connecteur gérant l'interopérabilité 725, le service web 710-2, l'architecture SOA 705, le service web 710-3 et l'adaptateur 735. De la même façon, l'application externe 730 peut accéder à une application Cobol 720. Néanmoins, dans ce dernier cas, il n'est pas nécessaire d'utiliser le connecteur gérant l'interopérabilité 725, l'accès à l'application développée pour un environnement d'exécution de type propriétaire étant réalisé via un container, comme décrit précédemment.

Un dispositif adapté à mettre en œuvre l'invention est illustré sur la figure 8. Le dispositif 800 par exemple un ordinateur ou un serveur.

Le dispositif 800 comporte ici un bus de communication 805 auquel sont reliés :
- une unité de traitement ou microprocesseur 810 (CPU, *Central Processing Unit* en terminologie anglo-saxonne) ;
- une mémoire morte 815 (ROM, *Read Only Memory* en terminologie anglo-saxonne) pouvant comporter des programmes "Prog" de traitement de données et/ou de gestion de transactions ;
- une mémoire vive ou mémoire cache 820 (RAM, *Random Access Memory* en terminologie anglo-saxonne) comportant des registres adaptés à enregistrer des variables et paramètres créés et modifiés au cours de l'exécution des programmes précités ; et,
- une interface de communication 825 adaptée notamment à échanger des données avec un réseau de communication.

Le dispositif 800 peut également disposer :
- d'un écran 845 permettant de visualiser des données et/ou de servir d'interface graphique avec l'utilisateur qui pourra interagir avec les programmes conformément à l'invention, à l'aide d'un clavier et d'une souris 850 ou d'un autre dispositif de saisie et de pointage ;
- d'un disque dur 830 pouvant comporter le programme "prog" et les modules logiciels de transmission de données précités et des données traitées ou à traiter ; et,
- d'un lecteur de disque 835 adapté à recevoir un disque 840, par exemple un CD-ROM (sigle de *Compact Disc Read Only Memory* en terminologie anglo-saxonne) ou un DVD (sigle de *Digital Video Disc* en terminologie anglo-saxonne). Un disque peut notamment comporter des programmes qui peuvent être exécutés directement à partir du disque ou après installation sur le disque dur 830.

Le bus de communication permet la communication et l'interopérabilité entre les différents éléments inclus dans le dispositif 800 ou reliés à lui. La représentation du bus n'est pas limitative et, notamment, l'unité de traitement 810 est susceptible de communiquer des instructions à tout élément au dispositif 800 directement ou par l'intermédiaire d'un autre élément de celui-ci.

Le code exécutable des programmes permettant au dispositif 800 de mettre en œuvre les processus selon l'invention, peut être stocké, par exemple, dans le disque dur 830 ou en mémoire morte 815.

Selon une variante, le code exécutable des programmes peut être reçu, au moins partiellement, par l'intermédiaire de l'interface de communication, pour être stocké de façon identique à celle décrite précédemment.

L'unité de traitement 810 commande et dirige l'exécution des instructions ou portions de code logiciel du ou des programmes.

Naturellement, pour satisfaire des besoins spécifiques, une personne compétente dans le domaine de l'invention pourra appliquer des modifications dans la description précédente.

## Revendications

1. Dispositif pour l'exécution d'au moins une transaction dans un système de traitement de transactions comprenant un moniteur transactionnel (205) exécutable dans un environnement d'exécution de type ouvert (110), c'est-à-dire dont les spécifications techniques sont publiques, ladite au moins une transaction étant exécutée par l'exécution séquentielle d'une pluralité de composants transactionnels (235, 240), ledit moniteur transactionnel comportant une mémoire de travail (225) comportant des données associées au contexte d'exécution de l'au moins une transaction, ledit dispositif étant **caractérisé en ce qu'**il comprend un container (130) mis en œuvre dans l'environnement d'exécution de type ouvert, ledit container comportant :
- un connecteur (255) pour recevoir dudit moniteur transactionnel au moins une commande d'exécution d'au moins un composant transactionnel de ladite pluralité de composants transactionnels, ledit au moins un composant transactionnel étant développé pour un environnement d'exécution de type propriétaire, c'est-à-dire que le composant est développé pour s'exécuter sur des machines spécifiques, distinct dudit environnement d'exécution de type ouvert ; et,
- un moteur d'exécution (275) pour créer un espace d'exécution de type propriétaire, ledit moteur d'exécution (275) étant configuré pour aller chercher lesdites données associées au contexte d'exécution de la transaction dans la mémoire de travail (225) du moniteur transactionnel, puis exécuter ledit au moins un composant transactionnel dans ledit espace d'exécution de type propriétaire créé,
de sorte que le moteur d'exécution permet, via le connecteur (255), d'exécuter dans un environnement d'exécution de type ouvert, le composant transactionnel développé pour l'environnement d'exécution de type propriétaire.

2. Dispositif selon la revendication précédente, le moteur d'exécution (275) comprenant un module de gestion de communication (265) pour lire et/ou écrire au moins une donnée dans ladite mémoire de travail, ladite au moins une donnée étant utilisée pour exécuter au moins une partie de ladite au moins une transaction.

3. Dispositif selon la revendication 1 ou la revendication 2 selon lequel le moteur d'exécution (275) comprend un module de gestion du contexte d'exécution (260) de ladite au moins une transaction.

4. Dispositif selon l'une quelconque des revendications précédentes comprenant en outre des moyens pour exécuter au moins un second composant transactionnel de ladite pluralité de composants transactionnels, distinct dudit au moins un composant transactionnel appelé premier composant transactionnel, ledit au moins second composant transactionnel étant développé pour ledit environnement d'exécution de type ouvert.

5. Dispositif selon l'une quelconque des revendications précédentes selon lequel ledit moniteur transactionnel comprend des moyens de communication pour échanger des données avec un système extérieur, lesdits moyens de communication étant adaptés à recevoir une commande pour l'exécution d'au moins une partie de ladite au moins une transaction.

6. Dispositif selon la revendication précédente comprenant en outre un gestionnaire de services (605) adapté à recevoir une séquence d'identifiants de composants transactionnels et à transmettre séquentiellement des commandes d'exécution des composants transactionnels correspondant à chacun desdits identifiants reçus.

7. Dispositif selon l'une quelconque des revendications précédentes comprenant en outre des moyens de connexion (725) adaptés à transmettre une commande d'exécution, reçue d'un composant transactionnel quelconque de ladite au moins une transaction, à au moins une application externe.

8. Dispositif selon la revendication précédente selon lequel lesdits moyens de connexion sont compatibles avec une architecture offrant des services de type client/serveur entre des applications exécutées dans des environnements différents.

9. Dispositif selon l'une quelconque des revendications précédentes selon lequel ledit environnement d'exécution de type ouvert comprend un serveur d'applications utilisé comme interface entre un système extérieur et ledit moniteur transactionnel.

10. Procédé d'exécution d'au moins une transaction dans un système comprenant au moins un moniteur transactionnel (205) exécutable dans un environnement d'exécution de type ouvert (110), c'est-à-dire dont les spécifications techniques sont publiques, ladite au moins une transaction étant exécutée par l'exécution séquentielle d'une pluralité de composants transactionnels (235, 240), ledit procédé étant **caractérisé en ce qu'**il comprend les étapes suivantes :
- réception, dudit moniteur transactionnel, d'au moins une commande d'exécution (410) d'au moins un composant transactionnel de ladite pluralité de composants transactionnels, ledit au moins un composant transactionnel étant développé pour un environnement d'exécution de type propriétaire, c'est-à-dire que le composant est développé pour s'exécuter sur des machines spécifiques, distinct dudit environnement d'exécution de type ouvert ;
- création, dans un container (130) mis en œuvre dans l'environnement d'exécution de type ouvert, d'un espace d'exécution de type propriétaire;
- chargement, par le moteur d'exécution (275), depuis une mémoire de travail (225) du moniteur transactionnel, de données associées au contexte d'exécution de la transaction ; et,
- exécution (425) dudit au moins un composant transactionnel dans ledit espace d'exécution créé.

11. Procédé selon la revendication 10 comprenant en outre une étape d'exécution d'au moins un second composant transactionnel de ladite pluralité de composants transactionnels, distinct dudit au moins un composant transactionnel appelé premier composant transactionnel, ledit au moins second composant transactionnel étant développé pour ledit environnement d'exécution de type ouvert.

12. Procédé selon la revendication 10 ou la revendication 11, comprenant en outre une étape de réception d'au moins une commande pour l'exécution de ladite au moins une transaction.

13. Procédé selon l'une quelconque des revendications 10 à 12 comprenant en outre une étape de transmission d'au moins une commande d'exécution reçue d'un composant transactionnel quelconque de ladite au moins une transaction pour exécuter une application externe audit moniteur transactionnel.

14. Programme d'ordinateur comprenant des instructions adaptées à la mise en oeuvre de chacune des étapes du procédé selon l'une quelconque des revendications 10 à 13 lorsque ledit programme est exécuté sur un ordinateur.

15. Moyens de stockage d'informations, amovible ou non, partiellement ou totalement lisible par un ordinateur ou un microprocesseur comportant des instructions de code d'un programme d'ordinateur pour l'exécution de chacune des étapes du procédé selon l'une quelconque des revendications 10 à 13.

## Patentansprüche

1. Vorrichtung zur Ausführung mindestens einer Transaktion in einem Transaktionsverarbeitungssystem, das einen Transaktionsmonitor (205) umfasst, der in einer Ausführungsumgebung des offenen Typs (110) ausführbar ist, d.h. dessen technischen Spezifikationen öffentlich sind, wobei die mindestens eine Transaktion durch die sequentielle Ausführung mehrerer Transaktionskomponenten (235, 240) ausgeführt wird, wobei der Transaktionsmonitor einen Arbeitsspeicher (225) enthält, der Daten enthält, die mit dem Ausführungskontext der mindestens einen Transaktion zusammenhängen, wobei die Vorrichtung **dadurch gekennzeichnet ist, dass** sie einen Container (130) umfasst, der in der Ausführungsumgebung des offenen Typs eingesetzt wird, wobei der Container enthält:
- einen Steckverbinder (255), um von dem Transaktionsmonitor mindestens einen Ausführungsbefehl mindestens einer Transaktionskomponente der mehreren Transaktionskomponenten zu empfangen, wobei die mindestens eine Transaktionskomponente für eine Ausführungsumgebung des urheberrechtlich geschützten Typs entwickelt ist, d.h. die Komponente dazu entwickelt ist, sich auf spezifischen Maschinen ausführen zu lassen, die sich von der Ausführungsumgebung des offenen Typs unterscheiden; und
- einen Ausführungsmotor (275), um einen Ausführungsraum des urheberrechtlich geschützten Typs zu schaffen, wobei der Ausführungsmotor (275) dazu konfiguriert ist, die mit dem Ausführungskontext der Transaktion zusammenhängenden Daten im Arbeitsspeicher (225) des Transaktionsmonitors abzuholen, dann die mindestens eine Transaktionskomponente in dem geschaffenen Ausführungsraum des urheberrechtlich geschützten Typs auszuführen,
so dass es der Ausführungsmotor ermöglicht, über den Steckverbinder (255) in einer Ausführungsumgebung des offenen Typs die für die Ausführungsumgebung des urheberrechtlich geschützten Typs entwickelte Transaktionskomponente auszuführen.

2. Vorrichtung nach dem vorhergehenden Anspruch, wobei der Ausführungsmotor (275) ein Kommunikationsverwaltungsmodul (265) umfasst, um mindestens ein Datenelement aus dem/in den Arbeitsspeicher auszulesen und/oder einzuschreiben, wobei das mindestens eine Datenelement dazu verwendet wird, zumindest einen Teil der mindestens einen Transaktion auszuführen.

3. Vorrichtung nach Anspruch 1 oder Anspruch 2, wobei der Ausführungsmotor (275) ein Ausführungskontextverwaltungsmodul (260) der mindestens einen Transaktion umfasst.

4. Vorrichtung nach einem der vorhergehenden Ansprüche, darüber hinaus Mittel umfassend, um mindestens eine zweite Transaktionskomponente der mehreren Transaktionskomponenten auszuführen, die sich von der als erste Transaktionskomponente bezeichneten Transaktionskomponente unterscheidet, wobei die mindestens eine zweite Transaktionskomponente für die Ausführungsumgebung des offenen Typs entwickelt ist.

5. Vorrichtung nach einem der vorhergehenden Ansprüche, wobei der Transaktionsmonitor Kommunikationseinrichtungen umfasst, um Daten mit einem externen System auszutauschen, wobei die Kommunikationseinrichtungen dazu angepasst sind, einen Befehl zur Ausführung mindestens eines Teils der mindestens einen Transaktion zu empfangen.

6. Vorrichtung nach dem vorhergehenden Anspruch, darüber hinaus einen Service-Manager (605) umfassend, der dazu angepasst ist, eine Kennungssequenz von Transaktionskomponenten zu empfangen und nacheinander Ausführungsbefehle für die Transaktionskomponenten, die jeweils den empfangenen Kennungen entsprechen, zu übertragen.

7. Vorrichtung nach einem der vorhergehenden Ansprüche, darüber hinaus Verbindungseinrichtungen (725) umfassend, die dazu angepasst sind, einen Ausführungsbefehl, der von einer beliebigen Transaktionskomponente für die mindestens eine Transaktion empfangen wurde, an mindestens eine externe Anwendung zu übertragen.

8. Vorrichtung nach dem vorhergehenden Anspruch, wobei die Verbindungseinrichtungen mit einer Architektur kompatibel sind, die Dienste des Typs Client/Server zwischen in unterschiedlichen Umgebungen ausgeführten Anwendungen bietet.

9. Vorrichtung nach einem der vorhergehenden Ansprüche, wobei die Ausführungsumgebung des offenen Typs einen Anwendungsserver umfasst, der als Schnittstelle zwischen einem externen System und dem Transaktionsmonitor verwendet wird.

10. Verfahren zur Ausführung mindestens einer Transaktion in einem System, das mindestens einen Transaktionsmonitor (205) umfasst, der in einer Ausführungsumgebung des offenen Typs (110) ausführbar ist, d.h. dessen technischen Spezifikationen öffentlich sind, wobei die mindestens eine Transaktion durch die sequentielle Ausführung mehrerer Transaktionskomponenten (235, 240) ausgeführt wird, wobei das Verfahren **dadurch gekennzeichnet ist, dass** es die folgenden Schritte umfasst:
- Empfangen, vom Transaktionsmonitor, mindestens eines Ausführungsbefehls (410) für mindestens eine Transaktionskomponente der mehreren Transaktionskomponenten, wobei die mindestens eine Transaktionskomponente für eine Ausführungsumgebung des urheberrechtlich geschützten Typs entwickelt ist, d.h. die Komponente dazu entwickelt ist, sich auf spezifischen Maschinen ausführen zu lassen, die sich von der Ausführungsumgebung des offenen Typs unterscheiden;
- Schaffen, in einem Container (130), der in einer Ausführungsumgebung des offenen Typs eingesetzt wird, eines Ausführungsraums des urheberrechtlich geschützten Typs;
- Laden, durch den Ausführungsmotor (275), von mit dem Ausführungskontext der Transaktion zusammenhängenden Daten aus einem Arbeitsspeicher (225) des Transaktionsmonitors; und
- Ausführen (425) der mindestens einen Transaktionskomponente in dem geschaffenen Ausführungsraum.

11. Verfahren nach Anspruch 10, darüber hinaus einen Schritt des Ausführens mindestens einer zweiten Transaktionskomponenten der mehreren Transaktionskomponenten umfassend, die sich von der mindestens einen, als erste Transaktionskomponente bezeichneten Transaktionskomponente unterscheidet, wobei die mindestens eine zweite Transaktionskomponente für die Ausführungsumgebung des offenen Typs entwickelt ist.

12. Verfahren nach Anspruch 10 oder Anspruch 11, darüber hinaus einen Schritt des Empfanges mindestens eines Befehls zur Ausführung der mindestens einen Transaktion umfassend.

13. Verfahren nach einem der Ansprüche 10 bis 12, darüber hinaus einen Schritt des Übertragens mindestens eines Ausführungsbefehls umfassend, der von einer beliebigen Transaktionskomponente für die mindestens eine Transaktion empfangen wurde, um eine externe Anwendung auszuführen, an den Transaktionsmonitor.

14. Computerprogramm, Anweisungen umfassend, die an die Umsetzung jedes der Schritte des Verfahrens nach einem der Ansprüche 10 bis 13 angepasst sind, wenn das Programm auf einem Rechner ausgeführt wird.

15. Entnehmbare oder nicht entnehmbare Informationsspeichereinrichtungen, die teilweise oder ganz durch einen Computer oder einen Mikroprozessor lesbar sind, die Codeanweisungen eines Computerprogramms zur Ausführung jedes der Schritte des Verfahrens nach einem der Ansprüche 10 bis 13 enthalten.

## Claims

1. A device for executing at least one transaction in a transaction processing system comprising a transaction monitor (205) executable in an execution environment (110) of open type, that is to say of which the technical specifications have been made public, said at least one transaction being executed by the sequential execution of a plurality of transaction components (235, 240), said transaction monitor comprising a working memory (225 comprising data that are associated with the execution context of the at least one transaction, said device being **characterized in that** it comprises a container (130) implemented in the open-type execution environment, said container comprising:
- a connector (255) for receiving, from said transaction monitor, at least one command for executing at least one transaction component of said plurality of transaction components, said at least one transaction component being developed for an execution environment of proprietary type, that is to say that the component is developed to execute on specific machines, that is distinct from said open-type execution environment; and,
- a runtime (275) for creating a proprietary-type execution space, said runtime (275) being configured to search for said data associated with the execution context of the transaction in the working memory (225) of the transaction monitor, then to run said at least one transaction component in said created execution space of proprietary type,
such that the runtime makes it possible, via the connector (255), to run the transaction component developed for the proprietary type execution environment in an open type execution environment.

2. A device according to the preceding claim, the runtime (275) comprising a communication management module (265) to read and/or write at least one item of data from or to said working memory, said at least one item of data being used to execute at least one part of said at least one transaction.

3. A device according to claim 1 or claim 2 in which the runtime (275) comprises a module (260) for execution context management of said at least one transaction.

4. A device according to any one of the preceding claims further comprising means for executing at least one second transaction component of said plurality of transaction components that is distinct from said at least one transaction component referred to as first transaction component, said at least one second transaction component being developed for said open-type execution environment.

5. A device according to any one of the preceding claims in which said transaction monitor comprises communication means for exchanging data with an external system, said communication means being adapted to receive a command for executing at least one part of said at least one transaction.

6. A device according to the preceding claim further comprising a services manager (605) configured to receive a sequence of transaction component identifiers and sequentially to send execution commands for executing the transaction components corresponding to each of said received identifiers.

7. A device according to any one of the preceding claims further comprising connecting means (725) adapted to send an execution command, received from any transaction component of said at least one transaction, to at least one external application.

8. A device according to the preceding claim in which said connection means are compatible with an architecture offering client/server type services between applications executed in different environments.

9. A device according to any one of the preceding claims in which said open-type execution environment comprises an application server used as interface between an external system and said transaction monitor.

10. A method of executing at least one transaction in a system comprising at least one transaction monitor (205) executable in an execution environment (110) of open-type, that is to say of which the technical specifications have been made public, said at least one transaction being executed by the sequential execution of a plurality of transaction components (235, 240), said method being **characterized in that** it comprises the following steps :
- receiving, from said transaction monitor, at least one command (410) for executing at least one transaction component of said plurality of transaction components, said at least one transaction component being developed for an execution environment of proprietary type, that is to say that the component is developed to execute on specific machines, that is distinct from said open-type execution environment;
- creating, in a container (130) employed in the open-type execution environment, a proprietary-type execution space;
- loading by the runtime (275) of data associated with the execution context of the transaction, from a working memory (225) of the transaction monitor; and
- executing (425) said at least one transaction component in said created execution space.

11. A method according to claim 10, further comprising a step of executing at least one second transaction component of said plurality of transaction components that is distinct from said at least one transaction component referred to as first transaction component, said at least one second transaction component being developed for said open-type execution environment.

12. A method according to claim 10 or claim 11, further comprising a step of receiving at least one command for executing said at least one transaction.

13. A method according to any one of claims 10 to 12 further comprising a step of transmitting at least one execution command received from a transaction component of said at least one transaction for executing an application external to said transaction monitor.

14. A computer program comprising instructions adapted for carrying out each of the steps of the method according to any one of claims 10 to 13 when said program is executed on a computer.

15. Information storage means, removable or not, partially or totally readable by a computer or a microprocessor containing code instructions of a computer program for carrying out each of the steps of the method according to any one of claims 10 to 13.
